# FASCICULE DE BREVET EUROPEEN

(11) **EP 0 754 585 B1**
(45) Date de publication et mention de la délivrance du brevet: **20.10.1999**
(21) Numéro de dépôt: 96401599.4
(22) Date de dépôt: 18.07.1996
(51) Int. Cl.: B60J 10/04

(54) **Dispositif de liaison et d'étanchéité pour vitres coulissantes de véhicules automobiles**
Verbindungs- und Dichtungsanordnung für Schiebefenster von Kraftfahrzeugen
Connection and sealing means for sliding panes of motor vehicles

(30) Priorité: 18.07.1995 FR 9508652
(43) Date de publication de la demande: 22.01.1997
(73) Titulaire: STANDARD PRODUCTS INDUSTRIEL, F-95871 Bezons (FR)
(72) Inventeur: Chardon, Fernand R., 35500 Vitré (FR)
(74) Mandataire: Busnel, Jean-Benoît

(56) Documents cités:
- DE-A- 3 935 629
- FR-A- 2 583 359
- FR-A- 2 600 708
- US-A- 1 655 874
- US-A- 2 184 553
- US-A- 4 783 930
- US-A- 4 949 509

## Description

La présente invention concerne un dispositif de liaison et d'étanchéité pour vitres coulissantes de véhicules automobiles.

Le montage des systèmes traditionnels de manoeuvre de vitres coulissantes nécessite la présence de points de fixation et d'accrochage sur la vitre elle-même. Ces points sont généralement réalisés par perçage d'orifices dans la vitre et/ou par sertissage d'éléments métalliques. Ces opérations de préparation de la vitre sont laborieuses, coûteuses et fragilisent la vitre. En outre, la zone de liaison entre le système de manoeuvre et la vitre n'est pas équipée de moyens d'étanchéité efficaces et reçoit pourtant des infiltrations d'eau en provenance des lécheurs. Or, ces infiltrations qui ne sont ni arrêtées ni canalisées sont susceptibles de détériorer les pièces mécaniques et électriques qui sont logées sous la vitre dans le volume intérieur de la portière.

Par ailleurs, dans cette zone de liaison, il n'existe pas non plus de barrière phonique ni d'élément absorbant les vibrations. Or, le volume intérieur de la portière est susceptible de former une caisse de résonance vis-à-vis de l'habitacle.

Le document EP-A-0 694 429 publié postérieurement à la date de priorité du présent brevet constitue un état de la technique selon l'article 54 (3) et (4) CBE.

Ce document qui n'est pas pris en considération pour l'appréciation de l'activité inventive de l'objet de la présente demande, divulgue un dispositif de liaison et d'étanchéité pour vitre coulissante pourvu d'un profilé d'étanchéité et d'un organe de liaison avec le système de manoeuvre de la vitre.

Toutefois, le profilé est réalisé par extrusion et sous forme d'une pièce indépendante de l'organe de liaison.

La présente invention a pour but de résoudre de manière satisfaisante, les problèmes techniques posés par l'art antérieur.

Ce but est atteint au moyen d'un dispositif de liaison et d'étanchéité pour vitre coulissante montée dans un logement situé à l'intérieur d'une portière de véhicule automobile comprenant
- d'une part, à la partie inférieure de ladite vitre, un joint destiné à assurer l'étanchéité du volume intérieur de portière en position haute de la vitre et qui étant surmoulé sur la vitre, comporte une gouttière s'étendant du côté extérieur au véhicule, dont le bord libre se prolonge par une lèvre courte venant en contact d'appui lors de la montée de la vitre avec la partie inférieure externe du logement de ladite vitre et,
- d'autre part, d'un organe de liaison réalisé d'une seule pièce avec ledit joint et qui est pourvu d'un système de manoeuvre de ladite vitre.

Selon une caractéristique avantageuse d'un mode de réalisation de l'invention, ledit joint comporte une lèvre s'étendant du côté intérieur au véhicule et venant en contact d'appui lors de la montée de la vitre avec la partie inférieure interne du logement de ladite vitre.

Selon un autre mode de réalisation, ledit organe de liaison avec le système de manoeuvre de la vitre est constitué d'un alésage traversant le surmoulage sous la zone de raccordement à la vitre et destiné à recevoir un palier et un axe d'articulation.

Le dispositif de la présente invention permet de supprimer les différents perçages de la vitre ainsi que les inserts métalliques sertis ou bridés sur la vitre. Il permet de créer une liaison anti-vibratoire entre la vitre et son système de manoeuvre et possède des éléments d'étanchéité permettant de canaliser et d'évacuer les infiltrations d'eau venant des coulisses et des lécheurs de vitre. Il procure, en outre, une barrière acoustique supplémentaire améliorant le confort de l'habitacle.

Le dispositif de l'invention est entièrement et directement surmoulé sur la partie inférieure de la vitre, ce qui permet de réaliser un sous-ensemble complet prêt à la pose.

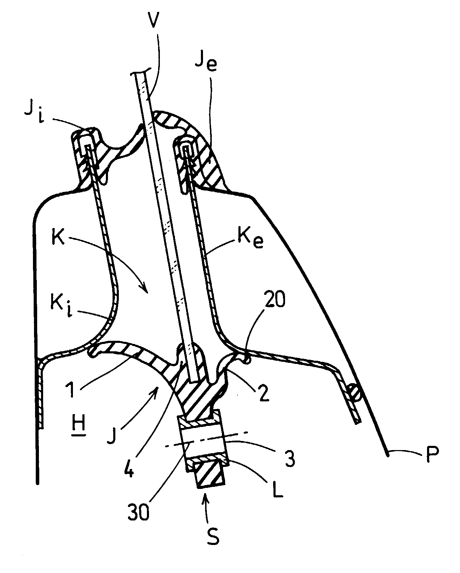

L'invention sera mieux comprise à la lecture de la description qui va suivre accompagnée du dessin sur lequel :
- la figure unique représente une vue en coupe verticale du dispositif de liaison et d'étanchéité de l'invention en position haute de la vitre.

Dans le mode de réalisation représenté sur cette figure, le dispositif comprend un surmoulage S d'une seule pièce réalisé à la partie inférieure de la vitre V et, de préférence, sur toute la longueur de son bord inférieur. Le surmoulage comporte un joint J destiné à assurer l'isolation acoustique et l'étanchéité du volume intérieur H de la portière P lorsque la vitre V et en position haute. Le surmoulage S comporte aussi un organe de liaison 3 avec le système de manoeuvre (non représenté) de la vitre V.

Le joint J comporte une lèvre 1 s'étendant du côté intérieur au véhicule et venant en contact d'appui, lors de la montée de la vitre V, avec la partie inférieure interne Ki du logement K de la vitre V.

Le joint J comporte également une gouttière 2 s'étendant du côté extérieur au véhicule et dont le bord libre se prolonge par une lèvre courte 20 venant en contact d'appui lors de la montée de la vitre V avec la partie inférieure externe Ke du logement K de la vitre V. Le logement K est obturé en partie haute de part et d'autre de la vitre V, par des lécheurs Je, Ji respectivement extérieur et intérieur.

L'organe de liaison 3 avec le système de manoeuvre de la vitre V est constitué d'un alésage 30 traversant la partie basse du surmoulage S, sous la zone de raccordement 4 à la vitre V. L'alésage 3 est destiné à recevoir un axe d'articulation (non représenté) logé dans un palier L.

## Revendications

1. Dispositif de liaison et d'étanchéité pour vitre coulissante (V) montée dans un logement (K) situé à l'intérieur d'une portière (P) de véhicule automobile comprenant
- d'une part, à la partie inférieure de ladite vitre (V), un joint (J) destiné à assurer l'étanchéité du volume intérieur de portière (P) en position haute de la vitre (V) et qui étant surmoulé sur la vitre, comporte une gouttière (2) s'étendant du côté extérieur au véhicule, dont le bord libre se prolonge par une lèvre courte (20) venant en contact d'appui lors de la montée de la vitre (V) avec la partie inférieure externe (Ke) du logement (K) de ladite vitre (V) et,
- d'autre part, d'un organe de liaison (3) réalisé d'une seule pièce avec ledit joint (J) et qui est pourvu d'un système de manoeuvre de ladite vitre (V).

2. Dispositif selon la revendication 1, caractérisé en ce que ledit joint (J) comporte, en outre, une lèvre (1) s'étendant du côté intérieur au véhicule et venant en contact d'appui lors de la montée de la vitre avec la partie inférieure interne (Ki) du logement (K) de ladite vitre (V).

3. Dispositif selon l'une des revendications précédentes, caractérisé en ce que ledit organe de liaison (3) avec le système de manoeuvre de la vitre (V) est constitué d'un alésage traversant (30) le surmoulage (S) sous la zone de raccordement (4) à la vitre (V) et destiné à recevoir un palier (L) et un axe d'articulation.

## Claims

1. Connecting and sealing device for a sliding pane (V) mounted in a housing (K) located inside a door (P) of a motor vehicle, comprising
- on the one hand, at the bottom of said pane (V), a joint (J) intended to seal the inner door space (P) when the pane (V) is in the raised position and which, being moulded over the pane, comprises a gutter (2) extending along the side exterior to the vehicle, the free edge of which is extended by a short lip (20) abutting on and making contact with the lower outer part (Ke) of the housing (K) of said pane (V) when the pane (V) is raised, and
- on the other hand, a connecting member (3) integrally formed with said joint (J) and provided with a system for operating said pane (V).

2. Device according to claim 1, characterised in that the said joint (J) further comprises a lip (1) extending along the side interior to the vehicle and abutting on and making contact with the lower inner part (Ki) of the housing (K) of said pane (V) when the pane is raised.

3. Device according to one of the preceding claims, characterised in that the said connecting member (3) connecting with the system for operating the pane (V) consists of a bore (30) passing through the overmoulding (S) below the zone of connection (4) to the pane (V) and adapted to receive a bearing (L) and an articulation pin.

## Patentansprüche

1. Verbindungs- und Dichtungsvorrichtung für Schiebefenster (V), die in einer Aufnahme (K) montiert sind, welche sich im Inneren einer Kraftfahrzeug-Wagentür (P) befindet, umfassend:
- einerseits, im unteren Teil des Fensters (V), eine Dichtung (J), welche dafür bestimmt ist, die Dichtigkeit des Raums innerhalb der Wagentür (P) in der oberen Position des Fensters (V) zu sichern und, da sie auf das Fenster gegossen ist, eine Rinne (2) umfaßt, die sich auf der Außenseite des Fahrzeugs erstreckt, deren freie Seite sich durch eine kurze Lippe (20) verlängert, welche beim Montieren des Fensters (V) in Kontakt kommt mit dem unteren äußeren Teil (Ke) der Aufnahme (K) des Fensters (V), und
- andererseits ein Verbindungsmittel (3), welches mit der Dichtung (J) einstückig ausgebildet ist, und ausgerüstet ist mit einem Betätigungssystem des Fensters (V).

2. Vorrichtung nach Anspruch 1, dadurch gekennzeichnet, daß die Dichtung (J) im übrigen eine Lippe (1) umfaßt, die sich auf der Innenseite des Fahrzeugs erstreckt und bei der Montage des Fensters in Kontakt gerät mit dem unteren inneren Teil (Ki) der Aufnahme (K) des Fensters (V).

3. Vorrichtung nach einem der vorangegangenen Ansprüche, dadurch gekennzeichnet, daß das Verbindungsmittel (3) mit dem Betätigungssystem des Fensters (V) gebildet ist aus einer Bohrung (30), welche durch den Guß (S) unter der Verbindungszone (4) mit dem Fenster (V) läuft, und dafür bestimmt ist, ein Lager und eine Drehachse aufzunehmen.
